# FASCICULE DE BREVET EUROPEEN

(11) **EP 0 886 354 B1**
(45) Date de publication et mention de la délivrance du brevet: **12.10.2005**
(21) Numéro de dépôt: 98110046.4
(22) Date de dépôt: 30.05.1998
(51) Int. Cl.: H02B 1/30

(54) **Armoire métallique pour appareils électriques**
Metallschrank für elektrische Geräte
Metal cabinet for electric apparatus

(30) Priorité: 17.06.1997 FR 9707614
(43) Date de publication de la demande: 23.12.1998
(73) Titulaire: Hispano Mecano Electrica S.A., 08786 Capellades (Barcelona) (ES)
(72) Inventeur: Regordosa, Lluis Xaus, Ing., 08700 Igualda (ES)

(56) Documents cités:
- EP-A- 0 010 291
- WO-A-93/10692
- DE-U- 9 106 011
- FR-A- 2 333 407
- FR-A- 2 581 825
- US-A- 4 643 319
- US-A- 4 899 900

## Description

La présente invention concerne une armoire métallique pour appareils électriques, formée d'au moins un flan de tôle formant une enveloppe à deux parois latérales, une paroi de toit et une paroi de fond ménageant une ouverture destinée à être fermée par une porte et qui présente en saillie vers l'avant une aile.

Le terme armoire désigne présentement, au-delà des armoires strictement dites, toute enveloppe devant loger des appareils électriques et s'étend notamment aux coffrets ou autres enveloppes analogues.

Le document WO 93/10692 décrit une armoire obtenue à partir d'un flan de tôle découpé et plié de manière à former une aile en saillie vers l'avant contre laquelle s'applique la porte. Toutefois, cette aile ne joue pas de rôle pour le montage d'auxiliaires ou d'accessoires à l'intérieur de l'armoire, plus particulièrement à l'avant de celle-ci.

Le document EP 10 291 décrit une armoire présentant un pli écrasé qui s'étend dans le plan de la paroi, la porte 3 se logeant à l'intérieur de ce pli écrasé.

L'invention a pour but de de ménager sur le pourtour de l'ouverture de l'armoire un espace facilement accessible pour des organes de fixation et de montage, tout en conférant à l'armoire une bonne rigidité et une bonne étanchéité.

L'invention est caractérisée par le fait que l'aile du bandeau avant est constituée par un pli écrasé sur lequel s'applique le joint d'étanchéité, ce pli étant relié au bandeau par une face en avancée par rapport au plan du bandeau et formant, perpendiculairement au plan du bandeau, une face rentrante dotée d'ouvertures disposées régulièrement en rangée pour la fixation de traverses ou d'accessoires.

Selon une caractéristique, le pli écrasé forme une face externe qui se raccorde, à l'aide d'une face parallèle au plan du bandeau, à la face inclinée formant une avancée et elle-même adjacente à la face de bandeau s'étendant selon le plan, la face interne se prolongeant par la face rentrante dotée d'ouvertures.

Selon une autre caractéristique, le pli écrasé et la face en avancée, située vers l'extérieur, sont inclinés avec des pentes opposées, relativement au plan de la paroi attenante.

La description va être faite ci-après d'un mode de réalisation non limitatif de l'invention, en regard des dessins annexés.
La figure 1 représente en perspective une armoire conforme à l'invention.
La figure 2 est une coupe partielle selon le plan II-II de la figure 1.
La figure 3 montre à échelle agrandie des détails de la figure 2.
La figure 4 montre une variante de fixation du panneau arrière.
La figure 5 montre un détail de fixation de porte.
La figure 6 représente le flan servant à réaliser la ceinture de l'armoire.

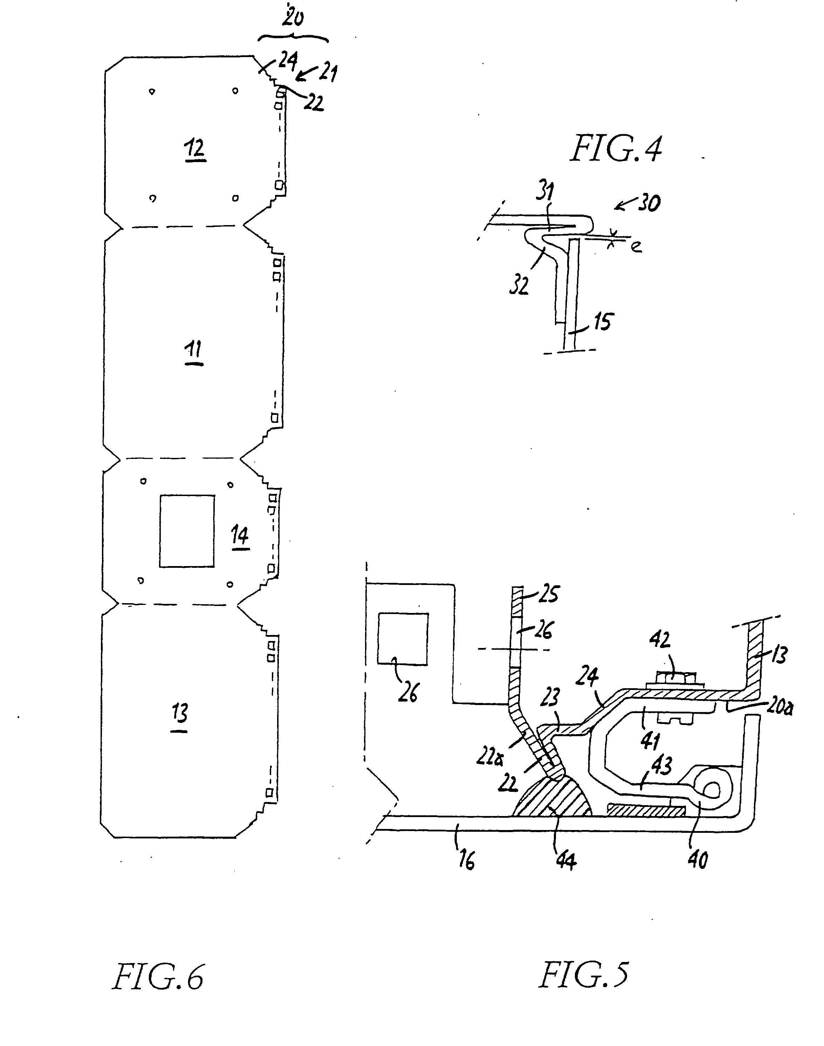

L'armoire A illustrée sur les figures comprend une ceinture 10 formée par une paroi latérale 11, une paroi de toit 12, une autre paroi latérale 13 et une paroi de fond 14 ; cette ceinture vient, par des opérations de découpe, pliage et soudage, d'un flan de tôle unique B (voir figure 6). L'armoire A comprend d'autre part un panneau arrière 15 fixé à la ceinture 10 et une porte avant 16 ; la ceinture 10 définit en face avant un bandeau d'encadrement 20 de plan P perpendiculaire aux plans des parois attenantes 11-14, ce bandeau délimitant une ouverture 17 susceptible d'être fermée par la porte 16. Dans une variante non représentée, seules les parois 11, 12, 13 comportent les caractéristiques énoncées.

Le bandeau d'encadrement 20 présente, en saillie vers l'avant, une aile 21 formée, au niveau de chacune des parois 11-14, par pliage à partir du bord de cette paroi. L'aile 21 comporte un pli écrasé 22 en avancée par rapport au plan P de la face 20a du bandeau 20 et relié à cette face par une succession de faces judicieusement orientées pour donner la rigidité souhaitée, à savoir une face 23 parallèle au plan P et une face inclinée 24 formant une avancée vers l'extérieur de l'armoire.

Le pli écrasé 22 offre deux faces jointives 22a,22b, la face externe 22a étant liée à la face 23 et la face interne 22b se prolongeant par une face rentrante 25 dirigée vers l'intérieur de l'armoire ; la face 25 est perpendiculaire à la face 20a du bandeau et parallèle à la paroi attenante de la ceinture ; la face rentrante 25 est perforée d'une rangée d'ouvertures 26 alignées avec un pas approprié pour permettre la fixation de traverses ou d'accessoires. Le pli écrasé 22 et la face d'avancée 24 sont inclinés relativement au plan Q de la paroi attenante de la ceinture avec des pentes opposées, dans une direction orientée vers l'extérieur de l'armoire, la pente du pli 22 étant faible, par exemple de l'ordre de 15°, pour former une gouttière au niveau du toit 12, et la pente de la face d'avancée 24 plus forte, par exemple de l'ordre de 45°. Il convient de noter que dans le dièdre formé entre la face d'avancée 24 et la face rentrante 25 est ménagé un espace C permettant de loger des organes de montage ou de fixation tels que vis, boulons, organes d'accrochage,..pour des traverses, consoles, montants, etc...facilitant le montage d'appareils à l'avant de l'armoire.

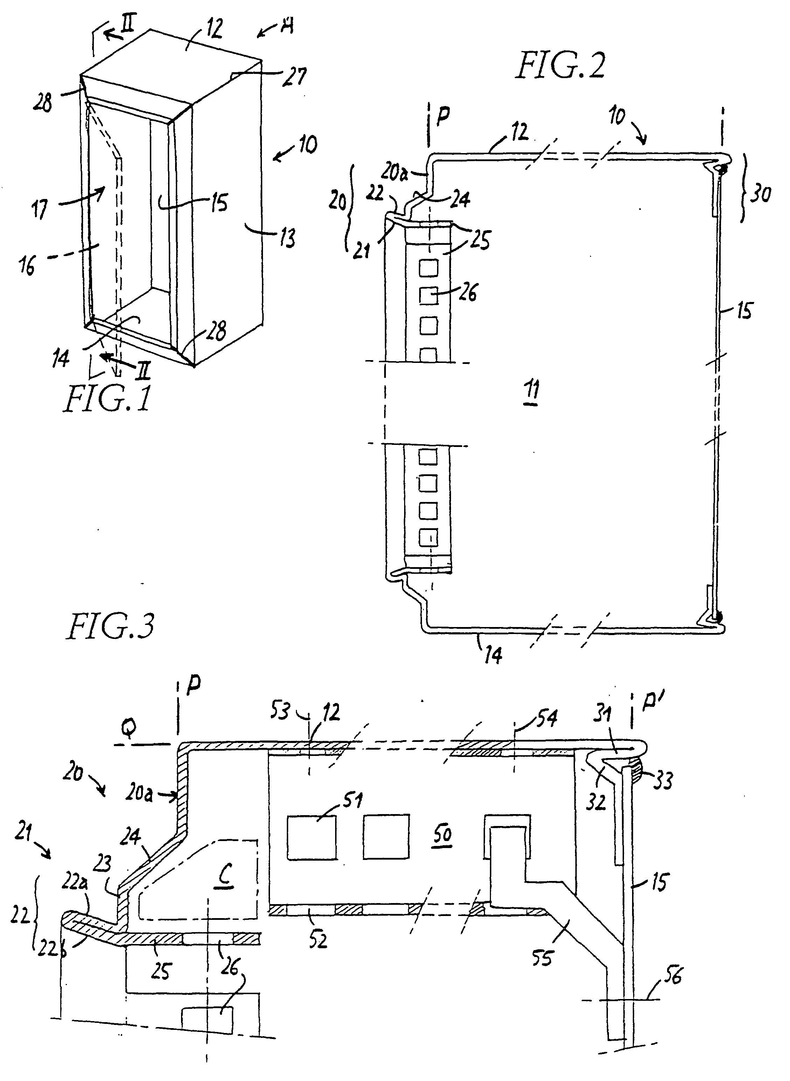

Après découpe et pliage de la ceinture 10, celle-ci est soudée le long d'une arête de joint (voir par exemple 27 sur la figure 1) au niveau des parois à joindre 12,13 et des coins à joindre du bandeau 20, dans le prolongement de l'arête 27. Les autres coins de jonction 28 du bandeau sont également soudés.

Sur le bord arrière de la ceinture 10 est prévu pour fixer le panneau arrière 15 un bandeau périphérique 30 ; pour chaque paroi 11-14, le bandeau est rabattu vers la paroi opposée en s'étendant selon un plan P' parallèle au plan P du bandeau avant 20 et perpendiculaire à la paroi attenante de la ceinture. Par exemple, en ce qui concerne la paroi de toit 12 ( figure 2 ), le bandeau périphérique 30 est formé au bord de cette paroi, en lui étant plus précisément lié par un retour intérieur 31, formant avec elle un pli écrasé, auquel succède un raccordement incliné 32. Après soudage du panneau 15 au bandeau périphérique 30, un joint d'étanchéité 33 est disposé entre le bord du panneau 15 et le retour 31 pour assurer l'étanchéité de leur liaison (voir figure 3). En variante, on prévoit un faible interstice e, par exemple de 0,1 à 0,2 mm, entre le bord du panneau 15 et le retour intérieur 31 et l'étanchéité d'assemblage du panneau est alors assurée par l'application de peinture sur cet interstice (voir figure 4).

On a représenté sur la figure 5 la disposition d'une pièce de charnière 40 en forme de U, cette pièce étant prévue pour recevoir une porte 16. La pièce de charnière 40 est fixée par une aile 41 à la face 20a du bandeau 20 par un boulon 42 ; son autre aile 43 est articulée à la porte 16, tandis que celle-ci porte un joint d'étanchéité 44 coopérant avec le bord d'inflexion du retour écrasé 22.

Des traverses perforées 50 (voir figure 3) sont d'autre part rapportées dans l'armoire aux angles des diverses parois composant la ceinture pour permettre de porter et fixer des châssis pleins, des longerons, etc... Ces traverses 50 sont des profilés munis de faces horizontales et verticales dotées de rangées d'ouvertures 51,52, etc.. de pas approprié ; les traverses sont fixées à la paroi de toit 12 ou de fond 14 par des boulons ou éléments de fixation analogues 53,54 et sont solidarisées avec le panneau arrière 15 au moyen de pattes 55 qui pénètrent et s'encastrent d'une part dans l'une au moins des ouvertures des rangées 51,52 et sont fixées d'autre part au panneau 15 par un boulon 56 ou autre élément de fixation analogue.

## Revendications

1. Armoire métallique pour appareils électriques, comprenant deux parois latérales (11,13), une paroi de toit (12), une paroi de fond (14) et un bandeau avant (20) formant une face (20a) perpendiculaire (P) à la paroi attenante (11 à14) et une aile (21) qui constitue le pourtour d'une ouverture (17) destinée à être fermée par une porte (16) pourvue d'un joint d'étanchéité (44) coopérant avec cette aile (21), plusieurs parois de l'enveloppe ainsi que le bandeau avant étant obtenus par pliage à partir d'un seul flan de tôle, ***caractérisée par le fait que*** l'aile (21) du bandeau avant (20) est constituée par un pli écrasé (22, 22a, 22b) sur lequel s'applique le joint d'étanchéité (44), ce pli étant relié au bandeau (20a) par une face (24) en avancée par rapport au plan (P) du bandeau et formant, perpendiculairement au plan du bandeau, une face rentrante (25) dotée d'ouvertures (26) disposées régulièrement en rangée pour la fixation de traverses ou d'accessoires.

2. Armoire selon la revendication 1, ***caractérisée par le fait que*** le pli écrasé (21) forme une face externe (22a) qui se raccorde, à l'aide d'une face (23) parallèle au plan (P) du bandeau, à la face inclinée (24) formant une avancée et elle-même adjacente à la face de bandeau (20a) s'étendant selon le plan (P), la face interne (22b) se prolongeant par la face rentrante (25) dotée d'ouvertures (26).

3. Armoire selon la revendication 1 ou 2, ***caractérisée par le fait que*** le pli écrasé (22) et la face en avancée (24), située vers l'extérieur, sont inclinés avec des pentes opposées, relativement au plan (Q) de la paroi attenante (11, 12, 13, 14)

4. Armoire selon l'une quelconque des revendications 1 à 3, ***caractérisée par le fait que*** le pli écrasé (22) est incliné d'un angle faible par rapport à la face rentrante (25) de manière à former une gouttière au niveau du toit.

5. Armoire selon l'une quelconque des revendications précédentes, ***caractérisée par le fait que*** la face (20a) du bandeau sert à fixer les charnières de la porte (16).

6. Armoire selon la revendication 1, ***caractérisée par le fait qu***'elle comporte aux angles de ses diverses parois (11-14) des traverses perforées (50) munies de rangées d'ouvertures (51,52), les traverses étant fixées d'une part à la paroi de toit (12) ou à la paroi de fond (14) et solidarisées d'autre part avec le panneau arrière (15) au moyen d'une patte (55) encastrée dans l'une au moins des ouvertures des rangées (51,52).

## Patentansprüche

1. Metallschrank für elektrische Geräte, der zwei Seitenwände (11, 13), eine Dachwand (12), eine Bodenwand (14) und eine vordere Blende (20) aufweist, die eine Fläche (20a) senkrecht (P) zur angrenzenden Wand (11 bis 14) und einen Flügel (21) bildet, der den Umriss einer Öffnung (17) bildet, die dazu bestimmt ist, von einer Tür (16) verschlossen zu werden, die mit einer Dichtung (44) versehen ist, die mit diesem Flügel (21) zusammenwirkt, wobei mehrere Wände der Hülle sowie die vordere Blende durch Falten ausgehend von einem einzigen Blechausschnitt erhalten werden, **dadurch gekennzeichnet, dass** der Flügel (21) der vorderen Blende (20) von einer zusammengedrückten Falte (22, 22a, 22b) gebildet wird, auf die sich die Dichtung (44) auflegt, wobei diese Falte mit der Blende (20a) durch eine Fläche (24) verbunden ist, die bezüglich der Ebene (P) der Blende vorspringt und senkrecht zur Ebene der Blende eine einspringende Fläche (25) bildet, die mit Öffnungen (26) versehen ist, die zur Befestigung von Querträgern oder Zubehörteilen gleichmäßig in Reihe angeordnet sind.

2. Schrank nach Anspruch 1, **dadurch gekennzeichnet, dass** die zusammengedrückte Falte (21) eine Außenfläche (22a) bildet, die sich mit Hilfe einer Fläche (23) parallel zur Ebene (P) der Blende an die einen Vorsprung bildende, geneigte Fläche (24) anschließt, die selbst der in der Ebene (P) verlaufenden Blendenfläche (20a) benachbart ist, wobei die Innenfläche (22b) durch die mit Öffnungen (26) versehene, einspringende Fläche (25) verlängert wird.

3. Schrank nach Anspruch 1 oder 2, **dadurch gekennzeichnet, dass** die zusammengedrückte Falte (22) und die nach außen angeordnete, vorspringende Fläche (24) bezüglich der Ebene (Q) der angrenzenden Wand (11, 12, 13, 14) zueinander entgegengesetzt geneigt sind.

4. Schrank nach einem der Ansprüche 1 bis 3, **dadurch gekennzeichnet, dass** die zusammengedrückte Falte (22) um einen kleinen Winkel bezüglich der einspringenden Fläche (25) geneigt ist, um in Höhe des Dachs eine Rinne zu formen.

5. Schrank nach einem der vorhergehenden Ansprüche, **dadurch gekennzeichnet, dass** die Fläche (20a) der Blende dazu dient, die Scharniere der Tür (16) zu befestigen.

6. Schrank nach Anspruch 1, **dadurch gekennzeichnet, dass** er an den Ecken seiner verschiedenen Wände (11-14) gelochte Querträger (50) aufweist, die mit Reihen von Öffnungen (51, 52) versehen sind, wobei die Querträger einerseits an der Dachwand (12) oder an der Bodenwand (14) befestigt und andererseits mit der Rückwand (15) mit Hilfe einer Lasche (55) fest verbunden sind, die in mindestens eine der Öffnungen der Reihen (51, 52) eingelassen ist.

## Claims

1. Metallic cabinet for electrical apparatus, comprising two side walls (11, 13), a roof wall (12), a bottom wall (14) and a front course (20) forming a face (20a) perpendicular (P) to the adjoining wall (11 to 14) and a wing (21) which forms the perimeter of an opening (17) intended to be closed by a door (16) provided with a door seal (44) cooperating with this wing (21), several walls of the enclosure and the front course being obtained by folding from a single sheet steel blank, ***characterized by the fact that*** the wing (21) of the front course (20) is formed by a flattened fold (22, 22a, 22b) to which is applied the door seal (44), this fold being linked to the course (20a) by a face (24) projecting relative to the plane (P) of the course and forming, perpendicular to the plane of the course, a re-entrant face (25) provided with openings (26) disposed at regular intervals in a row for fixing crossmembers or accessories.

2. Cabinet according to Claim 1, ***characterized by the fact that*** the flattened fold (21) forms an external face (22a) which is joined, by means of a face (23) parallel to the plane (P) of the course, to the inclined face (24) forming a projection and itself adjacent to the course face (20a) extending along the plane (P), the internal face (22b) being extended by the re-entrant face (25) provided with openings (26).

3. Cabinet according to Claim 1 or 2, ***characterized by the fact that*** the flattened fold (22) and the projecting face (24), located towards the outside, are inclined with opposing slopes, relative to the plane (Q) of the adjoining wall (11, 12, 13, 14).

4. Cabinet according to any one of Claims 1 to 3, ***characterized by the fact that*** the flattened fold (22) is inclined by a shallow angle relative to the re-entrant face (25) so as to form a gutter at the roof level.

5. Cabinet according to any one of the preceding claims, ***characterized by** t**he fact that*** the face (20a) of the course is used to fix door hinges (16).

6. Cabinet according to Claim 1, ***characterized by the fact that*** it comprises at the corners of its various walls (11-14) perforated crossmembers (50) provided with rows of openings (51, 52), the crossmembers being fixed on the one hand to the roof wall (12) or to the bottom wall (14) and secured on the other hand with the rear panel (15) by means of a tab (55) mortised into at least one of the openings of the rows (51, 52).
